# EUROPÄISCHE PATENTANMELDUNG

(11) **EP 3 252 551 A1**
(43) Veröffentlichungstag der Anmeldung: **06.12.2017**
(21) Anmeldenummer: 16172508.0
(22) Anmeldetag: 01.06.2016
(51) Int. Cl.: G05B 19/042, G05B 9/02

(54) **MODULARE SICHERHEITS-STEUERUNGSEINRICHTUNG MIT KRYPTOGRAFISCHER FUNKTIONALITÄT**

(71) Anmelder: Siemens Aktiengesellschaft, 80333 München (DE)
(72) Erfinder: Huber, Anton Sebastian, 68519 Viernheim (DE); Klasen, Wolfgang, 85521 Ottobrunn (DE); Quendt, Bernhard, 90537 Feucht (DE); Trummer, Georg, 92224 Amberg (DE)

(57) **Zusammenfassung**

Die vorliegenden Erfindung betrifft eine Modulare Sicherheits-Steuerungseinrichtung zur Steuerung eines Geräts (500) oder einer Anlage (500), umfassend:
- ein Steuerungs-Grundgerät (100), wobei das Steuerungs-Grundgerät (100) derart ausgebildet und eingerichtet ist, dass vermittels des Ablaufs eines Steuerungsprogramms im Steuerungs-Grundgerät (100) ein mit dem Steuerungs-Grundgerät verbindbares oder verbundenes Gerät (500), oder eine damit verbindbare oder verbundene Anlage (500), steuerbar ist oder gesteuert wird, und
- ein Sicherheitsmodul (200, 300), welches zur Bereitstellung oder Ausführung einer kryptographischen Funktionalität für das Steuerungs-Grundgerät (100) ausgebildet und eingerichtet ist,
- wobei das Sicherheitsmodul (200, 300) vermittels einer Datenverbindung über eine Datenschnittstelle mit dem Steuerungs-Grundgerät (100) verbunden ist,
- wobei das Steuerungs-Grundgerät (100) zum Zusammenwirken mit dem Sicherheitsmodul (200, 300) zum Erreichen einer Sicherheitsfunktion der Sicherheits-Steuereinrichtung ausgebildet und eingerichtet ist, und
- wobei das Sicherheitsmodul (200, 300) lösbar mit dem Steuerungs-Grundgerät (100) verbunden ist.

## Beschreibung

Die Erfindung betrifft eine modulare Sicherheits-Steuerungseinrichtung zur Steuerung eines Geräts oder einer Anlage, wobei die modulare Sicherheits-Steuerungseinrichtung ein Steuerungs-Grundgerät sowie ein Sicherheitsmodul umfasst, wobei das Sicherheitsmodul vermittels einer Datenverbindung über eine Datenschnittstelle mit dem Steuerungs-Grundgerät verbunden ist.

Derartige Sicherheits-Steuerungseinrichtungen sind aus dem Stand der Technik bekannt. So offenbart beispielsweise die europäische Patentanmeldung EP 2 506 100 A2 ein Schnittstellenmodul für eine modulare speicherprogrammierbare Steuerung, wobei das Schnittstellenmodul eine sogenannte "Firewall" zur Überwachung eines durch das Schnittstellenmodul hindurchgehenden Datenverkehrs aufweist.

Ausgehend vom Stand der Technik ist es eine Aufgabe der vorliegenden Erfindung, eine Steuerungseinrichtung mit verbesserten Sicherheits-Eigenschaften zur Verfügung zu stellen.

Der Begriff "Sicherheit" bezieht sich im Rahmen der vorliegenden Beschreibung im Wesentlichen auf die Sicherheit, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird.

Die vorstehend genannte Aufgabe wird gelöst von einer modularen Sicherheits-Steuerungseinrichtung mit den Merkmalen des Patentanspruchs 1.

Eine derartige modulare Sicherheits-Steuerungseinrichtung ist zur Steuerung eines Geräts oder einer Anlage ausgebildet und eingerichtet und umfasst ein Steuerungs-Grundgerät, wobei das Steuerungs-Grundgerät derart ausgebildet und eingerichtet ist, dass vermittels des Ablaufs eines Steuerungsprogramms im Steuerungs-Grundgerät ein mit dem Steuerungs-Grundgerät verbindbares oder verbundenes Gerät, oder eine damit verbindbare oder verbundene Anlage, steuerbar ist oder gesteuert wird. Weiterhin umfasst die modulare Sicherheits-Steuerungseinrichtung ein Sicherheitsmodul, welches zur Bereitstellung oder Ausführung einer kryptografischen Funktionalität für das Steuerungs-Grundgerät ausgebildet und eingerichtet ist. Dabei ist das Sicherheitsmodul vermittels einer Datenverbindung über eine Datenschnittstelle mit dem Steuerungs-Grundgerät verbunden. Das Steuerungs-Grundgerät ist zum Zusammenwirken mit dem Sicherheitsmodul zum Erreichen einer Sicherheitsfunktion der Sicherheits-Steuereinrichtung ausgebildet und eingerichtet. Weiterhin ist das Sicherheitsmodul lösbar mit dem Steuerungs-Grundgerät verbunden.

Eine derartige modulare Sicherheits-Steuerungseinrichtung bietet eine verbesserte Möglichkeit beispielsweise zur Daten- oder Kommunikations-Sicherheit einer derartigen Steuerungseinrichtung, da über das zusätzliche Sicherheitsmodul beispielsweise die Möglichkeit besteht, eigene oder fremd entwickelte Sicherheits-Kryptomodule oder ähnliche Module zur Verbesserung der Sicherheitseigenschaften der Steuerungseinrichtung hinzuzufügen. Durch das Zusammenwirken der Funktionalität des Sicherheitsmoduls mit der bereits im Grundgerät implementierten Funktionalität lässt sich so flexibel und gegebenenfalls anwenderspezifisch die Sicherheit einer Steuerungseinrichtung verbessern und spezifisch und flexibel anpassen.

Weiterhin kann ein Nutzer auf diese Weise z.B. auch durch eine eigenständige Implementierung und/oder ein eigenes Einbringen der Sicherheitsfunktionalität im Rahmen der modularen Komponente die Vertrauenswürdigkeit der Sicherheitsfunktionalität erhöhen, da er so die hohe Vertrauenswürdigkeit der eigenen kontrollierbaren Umgebung ausnutzen kann und weniger bzw. nicht von der Vertrauenswürdigkeit Dritter abhängig ist.

Die Sicherheits-Steuerungseinrichtung kann beispielsweise als ein Automatisierungssystem, ein "Controller", eine speicherprogrammierbare Steuerung (eine sogenannte "SPS" oder "PLC"), ein Industrie-PC (ein sogenannter "IPC"), ein Computer, gegebenenfalls inklusive eines Echtzeit-Systems, eine modulare speicherprogrammierbare Steuerung oder eine ähnliche Steuerungseinrichtung ausgebildet und eingerichtet sein.

Die vermittels der Sicherheits-Steuereinrichtung steuerbare Anlage beziehungsweise das steuerbare Gerät kann beispielsweise als eine Produktionsanlage, eine Werkzeugmaschine, ein Roboter, ein autonomes Transportsystem und/oder eine ähnliche Einrichtung, Vorrichtung oder Anlage ausgebildet und eingerichtet sein. Beispielsweise kann das Gerät beziehungsweise die Anlage für die Fertigungsindustrie, die Prozessindustrie, die Gebäudeautomatisierung und/oder auch die Energieerzeugung und -verteilung, für ein Verkehrssicherungssystem und/oder eine Verkehrssteuerung ausgebildet oder vorgesehen sein.

Das Steuerungs-Grundgerät kann beispielsweise einem Steuerungsgerät beziehungsweise einem Controller ohne Sicherheitsfunktionalität entsprechen. Ein solches Steuerungsgerät kann beispielsweise als Zentraleinheit einer speicherprogrammierbaren Steuerung, als speicherprogrammierbare Steuerung, als Industrie PC, als PC oder ähnliche Einrichtung ausgebildet und eingerichtet sein.

Dabei kann das Steuerungs-Grundgerät beispielsweise ein Echtzeit-Betriebssystem umfassen, welches eine Echtzeit-Steuerung eines mit dem Grundgerät verbundenen oder verbindbaren Geräts beziehungsweise einer damit verbundenen oder verbindbaren Anlage ermöglicht.

Das Steuerungs-Grundgerät und/oder das Sicherheitsmodul können beispielsweise ein Gehäuse umfassen. Das Gehäuse kann derart ausgebildet sein, dass das Steuerungs-Grundgerät und/oder das Sicherheitsmodul vor Umwelteinflüssen geschützt werden. Beispielsweise können derartige Gehäuse gemäß der "International Protection"-Klassifikation gemäß DIN 60529, DIN 40050-9 und/oder ISO 20653 ausgebildet und eingerichtet sein, z.B. gemäß den Klassen IP65 oder IP67.

Unter einer kryptografischen Funktionalität wird allgemein beispielsweise eine Funktion zur Verschlüsselung, zum Schutz der Vertraulichkeit, zum Integritätsschutz und/oder zur Authentifikation von Daten (z.B. Nutzerdaten, Steuerdaten, Konfigurationsdaten oder administrative Daten) verstanden. Die kryptografische Funktionalität des Sicherheitsmoduls kann dabei beispielsweise eine oder mehrere der nachfolgend aufgeführten Funktionalitäten umfassen:
- Schlüsselspeicherung
- System- und/oder Nutzer-Authentisierung
- Attestierung
- Verschlüsselung
- Entschlüsselung
- Berechnen einer kryptografischen Prüfsumme (z.B. Signatur)
- Prüfen einer kryptografischen Prüfsumme (z.B. Signatur)
- Schlüsselvereinbarung
- Schlüsselerzeugung
- Erzeugen von Zufallszahlen (z.B. Seed-Generierung)
- Lizenzierung
- Unterstützung von systemischen Überwachungsfunktionen (z.B. tamper-Schutz, Systemintegrität, SIEM)
- Überwachen oder Überwachung von Daten
- Validierung von Daten
- Filterung von Daten

Die aufgezählten kryptografischen Funktionalitäten können dabei jeweils wieder mit verschiedenen Verfahren oder Kombinationen von Verfahren ausgeführt sein.

Die Datenschnittstelle zwischen dem Sicherheitsmodul und dem Steuerungs-Grundgerät kann beispielsweise eine drahtgebundene oder drahtlose Schnittstelle sein. Dabei kann die Datenverbindung über eine drahtgebundene Schnittstelle beispielsweise über eine Kombination von entsprechend komplementären Steckverbinder-Komponenten oder auch über entsprechende Kontaktflächen oder -stifte erfolgen. Dabei kann die Datenschnittstelle als eine serielle oder parallele Datenschnittstelle ausgebildet und eingerichtet sein. Weiterhin kann die Datenschnittstelle zwischen Sicherheitsmodul und Steuerungs-Grundgerät auch als Drahtlos-Schnittstelle, z.B. eine WLAN-, eine Bluetooth- oder eine NFC-Schnittstelle (NFC: Near Field Communication) ausgebildet und eingerichtet sein.

Weiterhin kann das Sicherheitsmodul zudem auch mechanisch mit dem Steuerungs-Grundgerät verbunden sein, insbesondere lösbar mit dem Steuerungs-Grundgerät verbunden sein. Derartige Verbindungen können beispielsweise über entsprechende Verrastungen, Verklemmungen, Verschraubungen oder beliebige Kombinationen davon erfolgen.

Zudem kann vorgesehen sein, dass die Energieversorgung des Sicherheitsmoduls über das Steuerungs-Grundgerät erfolgt, beispielsweise über die Datenschnittstelle oder auch über eine gesonderte Schnittstelle zur Energieversorgung. Die Energieversorgung des Sicherheitsmoduls kann auch über eine gesonderte Zuführung erfolgen. Das Sicherheitsmodul kann auch eine eigene Energiequelle umfassen, wie beispielsweise eine Batterie, ein wiederaufladbarerer Akku, ein Kondensator und/oder eine vergleichbare Energiequelle.

Die Sicherheitsfunktion der Sicherheits-Steuereinrichtung kann beispielsweise jede Funktion zur Verschlüsselung, zum Schutz der Vertraulichkeit, zum Integritätsschutz, zur Authentifikation von Daten und/oder Ähnlichem bestehen. Daten können dabei z.B. Nutzerdaten, Steuerdaten, Konfigurationsdaten und/oder administrative Daten sein.

Dabei wird die jeweilige Sicherheitsfunktion der Sicherheits-Steuereinrichtung durch ein Zusammenwirken von Steuerungs-Grundgerät und Sicherheitsmodul erreicht. Ein solches Zusammenwirken kann beispielsweise die Abfrage von Sicherheitsfunktionalitäten durch das Steuerungs-Grundgerät, z.B. das Auslesen eines Schlüssels oder Abfragen eines entsprechenden Prüf-Ergebnisses bestehen.

Ganz allgemein wird unter dem Zusammenwirken von Sicherheitsmodul und Steuerungs-Grundgerät zum Erreichen der Sicherheitsfunktion ein Vorgehen verstanden, bei welchem beide der genannten Komponenten mitwirken. Dabei kann eine Mitwirkung im Rahmen des genannten Zusammenwirkens auch schon aus einem Abfragen oder Übertragen einer Information bestehen. Alternativ kann eine Mitwirkung im Rahmen des genannten Zusammenwirkens auch derart ausgestaltet sein, dass sowohl das Steuerungs-Grundgerät als auch das Sicherheitsmodul einen bezüglich des Sicherheits-Aspektes funktionalen Beitrag zum Erreichen der Sicherheitsfunktion der Sicherheits-Steuereinrichtung leisten.

Weiterhin ist das Sicherheitsmodul lösbar mit dem Steuerungs-Grundgerät verbunden. Auf diese Weise werden die Sicherheitseigenschaften der Sicherheits-Steuerungseinrichtung weiter verbessert, da durch ein lösbar mit dem Steuerungs-Grundgerät verbundenes Sicherheitsmodul das Austauschen eines solchen Sicherheitsmoduls gegen ein weiteres Sicherheitsmodul ermöglicht wird. So lassen sich z.B. Sicherheitseigenschaften der Sicherheits-Steuerungseinrichtung flexibel ändern und/oder anpassen, um das Gerät beispielsweise an veränderte Randbedingungen anzupassen oder auch neue, u.U. verbesserte Sicherheitsverfahren zu implementieren.

Unter einer lösbaren Verbindung wird in diesem Zusammenhang eine solche verstanden, welche während eines normalen, fachüblichen Gebrauchs der Sicherheits-Steuereinrichtung fixiert bleibt, und nur bei Ergreifung spezieller Maßnahmen zur Lösung der Verbindung oder unüblicher Gewalt gelöst wird. Eine solche lösbare Verbindung kann beispielsweise unter Anderem eine lösbare mechanische Verbindung des Sicherheitsmoduls mit dem Steuerungs-Grundgerät sein, welche z.B. als Verrastung, Verschraubung oder Ähnliches ausgebildet sein kann. Weiterhin kann bei einer drahtgebundenen Datenschnittstelle zwischen Sicherheitsmodul und Steuerungs-Grundgerät eine lösbare Verbindung zwischen diesen Komponenten eine Verbindung mittels entsprechender Steck-Elemente und/oder Kontakt-Elemente zum Herstellen und Lösen einer entsprechenden Datenverbindung umfassen. Eine derartige drahtgebundene Datenverbindung kann beispielsweise über spezielle Sicherheitsmaßnahmen, wie beispielsweise eine zusätzliche Verrastung oder Verschraubung noch zusätzlich gesichert sein.

Das Steuerungs-Grundgerät kann derart ausgebildet und eingerichtet sein, dass bei einem gelösten Sicherheitsmodul das Steuerungs-Grundgerät mit einer Grundgeräte-Funktionalität betreibbar ist oder betrieben wird. Dabei wird unter einem gelösten Sicherheitsmodul ein solches verstanden, welches zumindest keine Kommunikationsverbindung mehr mit dem Steuerungs-Grundgerät aufweist.

Auf diese Weise wird die Sicherheitsfunktionalität der Sicherheits-Steuerungseinrichtung weiter flexibilisiert, indem, beispielsweise in einer vertrauenswürdigen Umgebung, eine Grundgeräte-Funktionalität auch ohne zusätzliches Sicherheitsmodul zur Verfügung steht.

Dabei kann eine Grundgeräte-Funktionalität beispielsweise die vollständige Funktionalität eines Controllers oder einer speicherprogrammierbaren Steuerung, beispielsweise auch einer Zentraleinheit einer speicherprogrammierbaren Steuerung, umfassen. Weiterhin kann die Grundgeräte-Funktionalität auch bereits eingeschränkte Sicherheitsfunktionen oder auch vollständige Sicherheitsfunktionen umfassen. Die Grundgeräte-Funktionalität kann beispielsweise derart vorgesehen sein, dass dadurch zumindest eine Steuerung der zu steuernden Anlage beziehungsweise des zu steuernden Geräts in einem herkömmlichen Umfang sichergestellt ist.

Weiterhin kann das Steuerungs-Grundgerät zum Zusammenwirken mit einem gegen das Sicherheitsmodul austauschbaren zweiten Sicherheitsmodul mit einer zweiten kryptografischen Funktionalität zum Erreichen der Sicherheitsfunktion und/oder einer weiteren Sicherheitsfunktion der Sicherheits-Steuereinrichtung ausgebildet und eingerichtet sein. Auf diese Weise werden die Sicherheitseigenschaften der Sicherheits-Steuerungseinrichtungen weiter verbessert, indem z.B. die Verwendung verschiedener Sicherheitstechnologien flexibel ermöglicht wird oder auch ein Sicherheitsmodul einfach ausgetauscht bzw. auch durch ein verbessertes ersetzt werden kann.

Dabei kann das zweite Sicherheitsmodul entsprechend einem Sicherheitsmodul gemäß der vorliegenden Beschreibung ausgebildet und eingerichtet sein. Insbesondere kann es in Form und Schnittstellen-Geometrie derart ausgebildet sein, dass es anstelle des Sicherheitsmoduls mit dem Steuerungs-Grundgerät verbunden und/oder an oder in diesem angebracht oder eingebracht werden kann.

Die Verbindung des zweiten Sicherheitsmoduls mit dem Steuerungs-Grundgerät kann wiederum über die Datenschnittstelle oder auch eine weitere Datenschnittstelle erfolgen. Dabei kann die kryptografische Funktionalität des zweiten Sicherheitsmoduls vergleichbar mit der des Sicherheitsmoduls ausgebildet sein und beispielsweise wiederum zum Erreichen der Sicherheitsfunktion der Sicherheits-Steuerungseinrichtung führen. Weiterhin kann die zweite kryptografische Funktionalität auch derart verschieden von der kryptografischen Funktionalität des Sicherheitsmoduls sein, dass sich eine von der Sicherheitsfunktion verschiedene weitere Sicherheitsfunktion der Sicherheits-Steuereinrichtung ergibt beziehungsweis eine solche weitere Sicherheitsfunktion möglich wird.

Das Steuerungs-Grundgerät kann beispielsweise ein Gehäuse umfassen, wobei im Gehäuse eine Ausnehmung zur zumindest teilweisen Aufnahme des Sicherheitsmoduls ausgebildet und eingerichtet ist. Weiterhin ist im Steuerungs-Grundgerät ein Schnittstellen-Verbindungselement für die Datenschnittstelle derart vorgesehen, dass beim in der Ausnehmung aufgenommenen Sicherheitsmodul ein Datenaustausch zwischen Steuerungs-Grundgerät und Sicherheitsmodul erfolgt oder erfolgen kann. Auf diese Weise wird die Handhabung, und insbesondere eine sichere Handhabung, der Sicherheits-Steuerungseinrichtung erleichtert, da so eine versehentliche Fehlbedienung des Sicherheitsmoduls beziehungsweise der gesamten Steuerungseinrichtung erschwert wird. Dabei kann das Gehäuse bereits wie vorstehen beschrieben ausgebildet und eingerichtet sein, beispielsweise gemäß einer "International Protection"-Klassifikation.

Die Ausnehmung kann beispielsweise als eine Öffnung im Gehäuse oder ein entsprechender Schacht zur teilweisen Aufnahme oder auch gesamten Aufnahme des Sicherheitsmoduls ausgebildet und eingerichtet sein. Insbesondere kann weiterhin insbesondere eine Abdeckung vorgesehen sein, welche das Sicherheitsmodul oder/und die entsprechenden Schnittstellenelemente vor Umgebungseinflüssen und/oder auch Fehlbedienung und versehentlichem Herausnehmen oder Beschädigen schützt. Weiterhin kann die Ausnehmung auch zur Aufnahme von mehreren entsprechenden Sicherheitsmodulen ausgebildet und eingerichtet sein. Schnittstellen-Verbindungselemente können beispielsweise als entsprechende Steckverbinder-Elemente, Kontakt-Elemente oder auch Antennen für eine Drahtlos-Schnittstelle ausgebildet sein.

Die vorstehende Aufgabe wird auch gelöst von einem Verfahren zum Betrieb einer modularen Sicherheits-Steuerungseinrichtung gemäß der vorliegenden Beschreibung, wobei das Steuerungs-Grundgerät und das Sicherheitsmodul jeweils ein Schnittstellen-Verbindungselement aufweisen, über welche die Datenverbindung zwischen Steuerungs-Grundgerät und Sicherheitsmodul hergestellt ist. Das Verfahren umfasst dabei die folgenden Schritte:
- Trennen der Datenverbindung zwischen dem Steuerungs-Grundgerät und dem Sicherheitsmodul,
- Herstellen einer Datenverbindung über die Datenschnittstelle zwischen dem Steuerungs-Grundgerät und einem zweiten Sicherheitsmodul mit einer zweiten kryptografischen Funktionalität.

Dabei kann das Trennen der Datenverbindung zwischen dem Steuerungs-Grundgerät und dem Sicherheitsmodul beispielsweise durch räumliche Trennung der Schnittstellen-Verbindungselemente von Steuerungs-Grundgerät und Sicherheitsmodul erfolgen. Das Herstellen der Datenverbindung zwischen dem Steuerungs-Grundgerät und dem zweiten Sicherheitsmodul kann beispielsweise vermittels Annähern und/oder Kontaktieren eines Schnittstellen-Verbindungselements des zweiten Sicherheitsmoduls und des Schnittstellen-Verbindungselements des Steuerungs-Grundgeräts erfolgen. Dabei kann das Herstellen der Datenverbindung weiterhin auch eine nachfolgende Kommunikation zur Herstellung einer funktionierenden Datenverbindung umfassen.

Schnittstellen-Verbindungselemente von Steuerungs-Grundgerät und dem jeweiligen Sicherheitsmodul können beispielsweise entsprechend zusammenwirkende Steckerelemente, Kontaktelemente oder auch Antennen umfassen oder aus solchen bestehen. Weiterhin kann das zweite Sicherheitsmodul entsprechend einem Sicherheitsmodul gemäß der vorliegenden Beschreibung ausgebildet und eingerichtet sein.

Das Steuerungs-Grundgerät und das zweite Sicherheitsmodul können weiterhin derart ausgebildet und eingerichtet sein, dass das zweite Sicherheitsmodul anstelle des Sicherheitsmoduls am oder im Steuerungs-Grundgerät platzierbar und mit diesem verbindbar ist.

Über ein oder mehrere Sicherheitsmodule gemäß der vorliegenden Beschreibung lassen sich beispielsweise erstmalig Kryptofunktionen für eine modulare Sicherheits-Steuerungseinrichtung gemäß der vorliegenden Beschreibung bereitstellen.

Nachfolgend wird die Erfindung beispielhaft mit Bezug auf die beiliegende Figur näher erläutert.

Es zeigt:

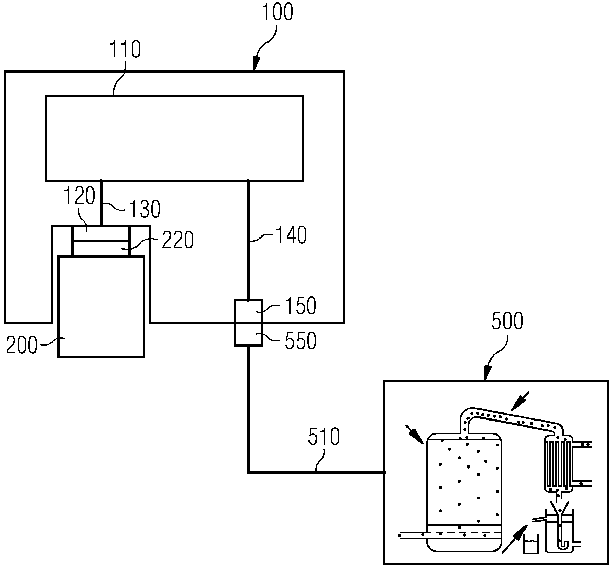

Fig. 1: Beispielhafte Steuerung mit Sicherheitsmodul zur Steuerung einer Anlage.

Fig. 1 zeigt eine Steuerung 100 mit einem internen Controller 110 zur Steuerung einer Anlage 500. Die Steuerung 100 stellt dabei ein Beispiel für ein Steuerungs-Grundgerät gemäß der vorliegenden Beschreibung dar. Über einen internen Datenbus 140 und eine I/O-Schnittstelle 150, einen Feldbusanschluss 550 und einen Feldbus 510 steuert ein im Controller 110 ablaufendes Steuerungsprogramm die Anlage 500. Weiterhin umfasst die Steuerung 100 einen Sicherheitsdatenbus 130, über welchen ein Sicherheitsmodul 200 gemäß der vorliegenden Beschreibung mit dem Controller 110 verbunden ist. Die Verbindung erfolgt über ein Steckerelement 120 der Steuerung 100 und ein entsprechendes Gegen-Steckerelement 220 des Sicherheitsmoduls 200.

Das Sicherheitsmodul 200 umfasst beispielsweise einen Schlüssel zur Verschlüsselung von Daten, die vom Controller 110 zur Anlage 500 gesendet werden.

Dabei kann das Sicherheitsmodul 200 beispielsweise Schlüssel enthalten, welche über den Sicherheitsdatenbus 130 an den Controller 110 gesendet werden, um dort zur Verschlüsselung der an die Anlage 500 gesendeten Daten genützt zu werden. Alternativ kann das Sicherheitsmodul 200 auch die Schlüssel und die gesamte Verschlüsselungslogik umfassen, so dass beispielsweise vom Controller 110 an die Anlage 500 zu versendende Daten erst über den Sicherheitsbus 130 an das Sicherheitsmodul gesendet werden, dort verschlüsselt werden, die verschlüsselten Daten zurück über den Sicherheits-Datenbus 130 an den Controller 110 gesendet werden und von dort an die Anlage 500.

## Patentansprüche

1. Modulare Sicherheits-Steuerungseinrichtung zur Steuerung eines Geräts (500) oder einer Anlage (500), umfassend:
- ein Steuerungs-Grundgerät (100), wobei das Steuerungs-Grundgerät (100) derart ausgebildet und eingerichtet ist, dass vermittels des Ablaufs eines Steuerungsprogramms im Steuerungs-Grundgerät (100) ein mit dem Steuerungs-Grundgerät verbindbares oder verbundenes Gerät (500), oder eine damit verbindbare oder verbundene Anlage (500), steuerbar ist oder gesteuert wird, und
- ein Sicherheitsmodul (200, 300), welches zur Bereitstellung oder Ausführung einer kryptographischen Funktionalität für das Steuerungs-Grundgerät (100) ausgebildet und eingerichtet ist,
- wobei das Sicherheitsmodul (200, 300) vermittels einer Datenverbindung über eine Datenschnittstelle mit dem Steuerungs-Grundgerät (100) verbunden ist,
- wobei das Steuerungs-Grundgerät (100) zum Zusammenwirken mit dem Sicherheitsmodul (200, 300) zum Erreichen einer Sicherheitsfunktion der Sicherheits-Steuereinrichtung ausgebildet und eingerichtet ist, und
- wobei das Sicherheitsmodul (200, 300) lösbar mit dem Steuerungs-Grundgerät (100) verbunden ist.

2. Modulare Sicherheits-Steuerungseinrichtung gemäß Anspruch 1,
**dadurch gekennzeichnet,**
**dass** das Steuerungs-Grundgerät (100) weiterhin zum Zusammenwirken mit einem gegen das Sicherheitsmodul (200, 300) austauschbaren zweiten Sicherheitsmodul mit einer zweiten kryptographischen Funktionalität zum Erreichen der Sicherheitsfunktion und/oder einer weiteren Sicherheitsfunktion der Sicherheits-Steuereinrichtung ausgebildet und eingerichtet ist.

3. Modulare Sicherheits-Steuerungseinrichtung gemäß einem der vorstehenden Ansprüche,
**dadurch gekennzeichnet,**
**dass** Steuerungs-Grundgerät (100) ein Gehäuse umfasst, wobei im Gehäuse eine Ausnehmung zur zumindest teilweisen Aufnahme des Sicherheitsmoduls (200, 300) ausgebildet und eingerichtet ist, wobei weiterhin im Steuerungs-Grundgerät (100) ein Schnittstellen-Verbindungselement (120) für die Datenschnittstelle derart vorgesehen ist, dass beim in der Ausnehmung aufgenommenen Sicherheitsmodul (200, 300) ein Datenaustausch zwischen Steuerungs-Grundgerät (100) und Sicherheitsmodul (200, 300) erfolgt oder erfolgen kann.

4. Modulare Sicherheits-Steuerungseinrichtung gemäß einem der vorstehenden Ansprüche,
**dadurch gekennzeichnet,**
**dass** über die Datenschnittstelle Identifikations-Informationen des Sicherheitsmoduls (200, 300) zum Steuerungs-Grundgerät (100) übertragen und im Steuerungs-Grundgerät (100) gespeichert werden,
und/oder
**dass** über die Datenschnittstelle Identifikations-Informationen des Steuerungs-Grundgeräts (100) zum Sicherheitsmodul (200, 300) übertragen und im Sicherheitsmodul (200, 300) gespeichert werden.

5. Verfahren zum Betrieb einer modularen Sicherheits-Steuerungseinrichtung gemäß einem der Ansprüche 1 bis 4, wobei das Steuerungs-Grundgerät (100) und das Sicherheitsmodul (200, 300) jeweils ein Schnittstellen-Verbindungselement (120, 122, 128, 220, 320, 228) aufweisen, über welche die Datenverbindung zwischen Steuerungs-Grundgerät (100) und Sicherheitsmodul (200, 300) hergestellt ist,
**gekennzeichnet durch**
die nachfolgenden Schritte:
- Trennen der Datenverbindung zwischen dem Steuerungs-Grundgerät (100) und dem Sicherheitsmodul (200, 300),
- Herstellen einer Datenverbindung über die Datenschnittstelle zwischen dem Steuerungs-Grundgerät (100) und einem zweiten Sicherheitsmodul (200, 300) mit einer zweiten kryptographischen Funktionalität.
